# EUROPEAN PATENT SPECIFICATION

(11) **EP 2 486 833 B1**
(45) Date of publication and mention of the grant of the patent: **04.07.2018**
(21) Application number: 11250148.1
(22) Date of filing: 10.02.2011
(51) Int. Cl.: A47J 43/07, A47J 43/046

(54) **Mixing vessel**
Mischgefäß
Cuve de mélange

(43) Date of publication of application: 15.08.2012
(73) Proprietor: Main Power InnoTech (Shenzhen) Manufacturing Co. Ltd., Guangdong (CN)
(72) Inventor: Lee, Kwok Kay, Kowloon Hong Kong (HK); Liu, Chun Yu, Kowloon Hong Kong (HK)
(74) Representative: Oxley, Robin John George

(56) References cited:
- WO-A2-2006/084055
- FR-A- 1 143 272
- GB-A- 747 764
- GB-A- 1 339 827
- US-A- 2 924 349
- US-A- 4 087 053
- US-A- 4 620 476
- US-A1- 2005 068 846
- US-A1- 2007 247 966

## Description

### Field of the Invention

The present invention relates to mixing vessels and in particular to a mixing vessel for use with a motorized food processor or blender.

### Background to the Invention

Food processors, oftentimes referred to as blenders, are use to chop, blend or mix a wide variety of foods and beverages, including hot and cold liquids and solids such as ice, fruits, vegetables and the like. In a typical blender, a vessel is provided that removable locates on a base comprising an electric motor. A blade assembly having a plurality of blades is located near the bottom of the vessel and is driven by the motor via a coupling means when the vessel is located on the base. State of the art mixing vessels for food processors are for example described in US patent application publication US 2005/0068846 A1, US patent publication 4,087,053 and UK patent specification 1 339 827.

In order to properly chop, blend or mix foods and beverages they must properly circulate around the vessel and through the blade assemble during operation of the processor. Liquids for example are drawn down the centre of the vessel through the blades and expelled upwardly along the sides of the vessel. However, solids or liquids of a thick consistency or large volume are sometimes unable to circulate properly around the vessel. These solids and thick liquids form a arch around the blades rather than moving through the blades.

### Summary of the Invention

It is an object of the present invention to provide a mixing vessel and a blade design that aids chopping, blending and/or mixing of a wide variety of foods and beverages.

According to the invention there is provided a mixing vessel for use with a motorize food processor, the vessel comprising: a vessel wall including an cylindrical upper section, a frustoconical lower section and a junction between the cylindrical upper section and frustoconical lower section, the cylindrical upper section having a longitudinal axis generally centered within the cylindrical upper section and an upper opening defining an upper end of the vessel wall, the frustoconical lower section being tapered from the junction towards a lower circular opening defining a lower end of the vessel wall, the lower opening being smaller than the upper opening, the two openings being eccentric, an upwardly tapered base for removably closing the lower circular opening,

the upwardly tapered base extending through the lower circular opening to a height adjacent the junction between the cylindrical upper wall section and the frustoconical lower wall section, a securing ring threadably engageable with a threaded lip formed at the lower circular opening for securing the upwardly tapered base within the opening, a vertical rotational spindle located through the centre of the base, and a blade assembly located on the spindle, the blade assembly comprising a pair of upwardly extending blade arms, a pair of radially extending blade arms and a pair of downwardly extending blade arms, and wherein the spindle and blade assembly are rotational about a rotational axis that is off-set from the longitudinal axis, wherein the frustoconical lower section comprises a plurality of contiguous cambered protuberances forming a hypocycloidal inner surface within the frustoconical lower section. Preferably, the pair of downwardly extending blade arms are parallel with surfaces of the upwardly tapered base. Preferably, the upper cylindrical section further comprises a plurality of inwardly extending circumferentially spaced elongate ribs.

Preferably, the spindle and blade assembly are rotational about a rotational axis that is inclined at an angle relative to the longitudinal axis.

Preferably, the blade assembly comprises a single sheet of metal having a central hub for engagement with the spindle and wherein the pairs of blade arms are circumferentially spaced about the hub.

Preferably, the upwardly tapered base comprises a lower frustoconical portion and an upper cylindrical portion, and wherein the downwardly extending blade arms are bent at an intermediary location to be parallel with surfaces of the frustoconical and cylindrical portions of the upwardly tapered base. Preferably, the pair of upwardly extending blade arms extend within the cylindrical upper section of the vessel. Further aspects of the invention will become apparent from the following description and appended drawings, which are given by way of example only to illustrate one or more preferred embodiments of the invention.

### Brief Description of the Drawings

The invention will now be described with reference to the accompanying drawings in which:

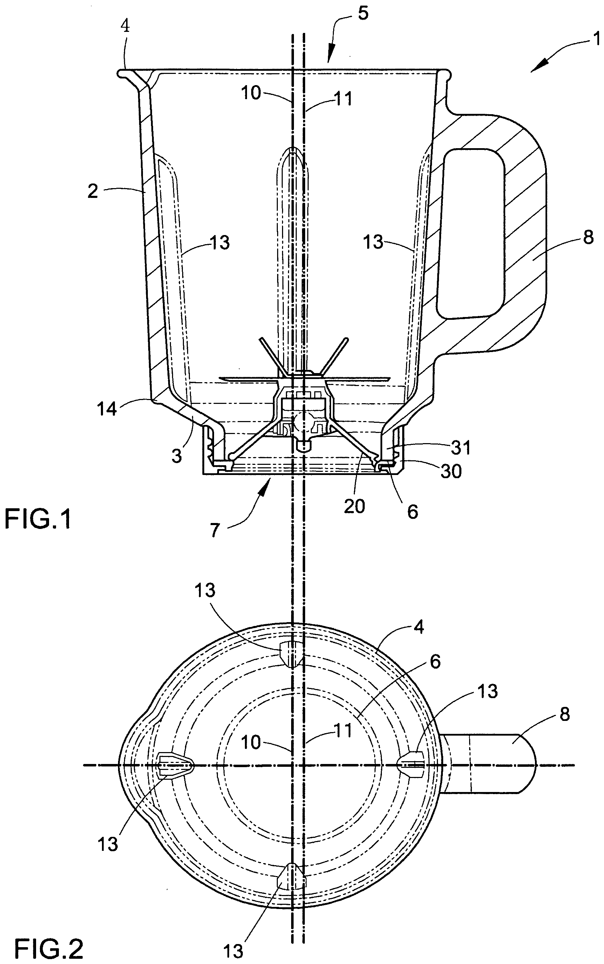

Figure 1 is a cross section view of a mixing vessel without base or blade assembly,
Figure 2 is a top view of the vessel of Figure 1,

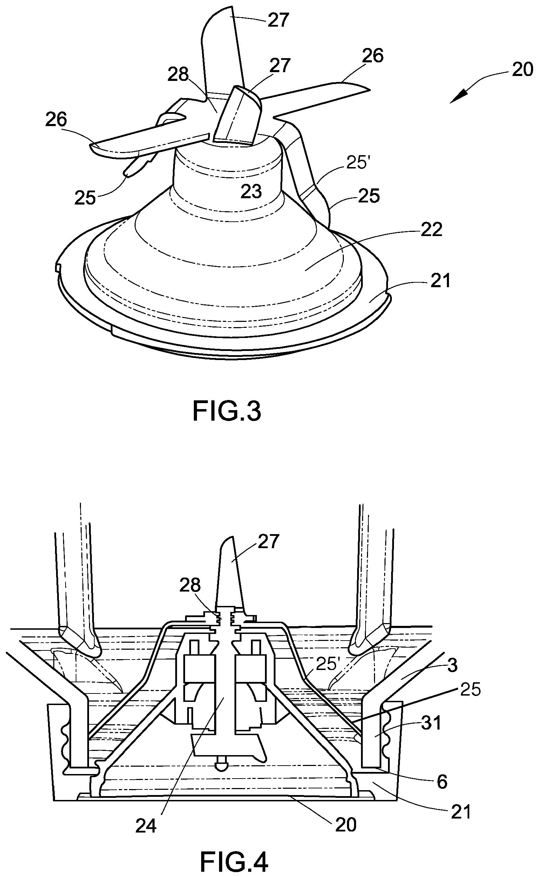

Figure 3 is a illustration of a base and blade assembly for the mixing vessel,
Figure 4 illustrates the base and blade assembly fitted with the mixing vessel,

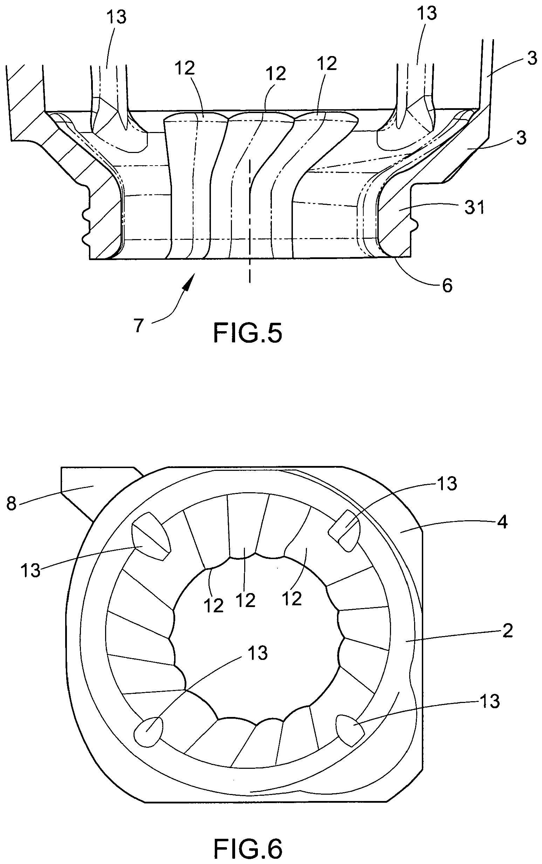

Figure 5 is a cross section view illustrating a hypocycloidal inner surface of the lower portion of the vessel,
Figure 6 is a top view illustrating the hypocycloidal inner surface of the lower portion of the vessel,
Figure 7 is an illustration of blade before bending of the blade arms, and
Figure 8 is an illustration of an alternative with inclined spindle and blade assembly.

### Detailed Description of the Preferred Embodiments

Before any embodiments of the invention are described in detail, it is to be understood that the invention is not limited in its application to the details of arrangements set forth in the following description or illustrated in the accompanying drawings. The invention is capable of other embodiments and of being practiced or of being carried out in various ways. Also, it is to be understood that the phraseology and terminology used herein are for the purpose of description and should not be regarded as limiting. The invention is defined in the appended claims. In the drawings there is illustrated a preferred embodiment of a mixing vessel 1 according to the invention. The vessel has a wall which includes a cylindrical upper section 2 and a frustoconical lower section 3. The top edge 4 of the wall defines a first top opening 5 in the vessel and the lower edge 6 of the wall defines a second bottom or lower opening in the vessel. The lower frustoconical section 3 of the wall is tapered towards the lower circular opening 7, which is smaller than the upper opening 5. The cylindrical upper section 2 defines a first longitudinal axis 10 generally centred within the upper section 2. The lower frustoconical section 3 of the wall defines a second longitudinal axis 11 generally centred with the lower circular opening 7. The second longitudinal axis 11 is off-set from the first longitudinal axis 10 such that the upper and lower openings 5, 7 eccentric. The lower vessel section 3 has a plurality of contiguous cambered protuberances 12 formed on its inner surface. The contiguous cambered protuberances 12 extend about the entire circumference of the tapered part of the lower vessel section 3 to form a hypocycloidal inner surface within the lower section of the vessel. The cylindrical upper section 2 of the wall has four of inwardly extending circumferentially spaced elongate ribs 13 which extend longitudinally from the junction 14 between the upper and lower sections of the wall for about two-thirds of the length of the cylindrical upper section 2.

The lower circular opening 7 is closed by an upwardly tapered base structure 20. The base 20 comprises a flange 21 which abuts against the lower edge 6 of the vessel wall. The base is removably secured by a ring 30 threadably engaged with threaded lip 31 formed at the lower edge 6 of the vessel wall. The upwardly tapered base structure 20 includes a lower frustoconical portion 3 and an upper cylindrical portion 2 which extend through the lower opening 7 to a height adjacent the junction 14 between the upper and lower sections of the wall. The upwardly tapered base structure 20 is located within the lower frustoconical section 3 of the wall with its top 28 at the level of the bottom of the cylindrical upper section 2. A vertical rotational spindle 24 is located through the centre of the base and has a blade assembly attached to its top end within the vessel. The lower end of the spindle 24 has a coupling means for engagement of a complementary motor drive coupling means (not shown). The spindle 24 and blade assembly are rotational about the second longitudinal axis 11 and thus are also off-set from the first longitudinal axis 10. The blade assembly is at the top 29 of the base and within the lower part of the cylindrical upper section 2 of the vessel. The spindle is off-set from the centre of the cylindrical upper section 2 of the vessel.

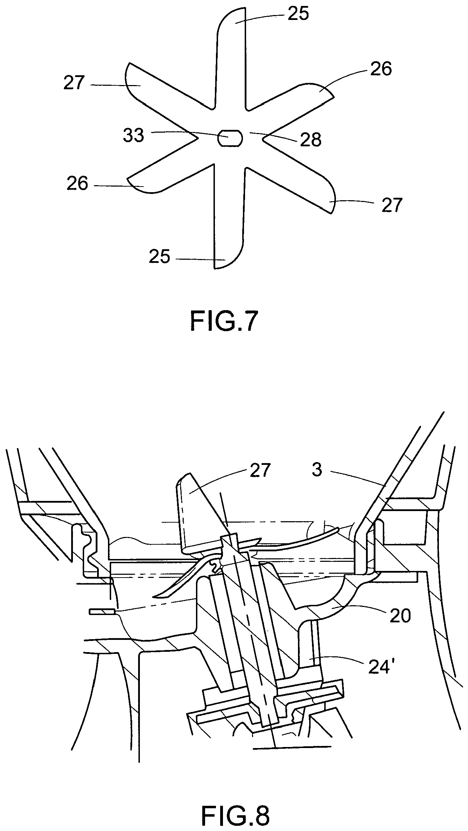

The blade assembly is located on the spindle 24 and is made of a single sheet of metal. Referring to Figure 7, the blade sheet has a hub 28 at its centre which has an opening 33 engaging the top of the spindle 24. Six circumferentially spaced blade arms extend from the hub 28. A first diametrically opposite pair of the arms are bent upwardly to form upper blades 27, a second diametrically opposite pair of the blade arms extend radially from the hub in a horizontal plane to form centre blades 26 and a third diametrically opposite pair of the blade arms are bent downwardly to form lower blades 25, wherein the pairs of blade arms are circumferentially spaced about the hub. The blade arms which include the lower blades 25 are bent at an intermediary location 25' such that the lower blades 25 are parallel with surfaces of the frustoconical 22 and cylindrical 23 portions of the base 20. This helps to avoid blockages during blending.

The complimentary double tapered arrangement of the lower frustoconical wall portion 3 and upwardly tapered base structure 20 shape the bottom space of the vessel, which combined with the action of the lower blades 25 causes thick food or liquids to be circulated rather than stay under the lower blades. The hypocycloidal inner surface within the lower section of the vessel causes a vortex action between the lower and centre blades 25, 26 to achieve improved blending. The ribs 13 of the upper cylindrical section 2 of the vessel help guide upwards follow during blending. The upwards flow circulates down the centre of the cylindrical section 2 of the vessel to the upper and centre blades 27, 26.

Figure 8 illustrates an alternative wherein the spindle 24 and blade assembly are rotational about a rotational axis 35 that is inclined at an angle relative to the longitudinal axis 10, which helps achieve improved blending.

## Claims

1. A mixing vessel for use with a motorized food processor, the vessel comprising:
a vessel wall including an cylindrical upper section (2), a frustoconical lower section (3) and a junction (14) between the cylindrical upper section (2) and frustoconical lower section (3), the cylindrical upper section having a longitudinal axis (10) generally centered within the cylindrical upper section (2) and an upper opening (5) defining an upper end of the vessel wall, the frustoconical lower section (3) being tapered from the junction (14) towards a lower circular opening (7) defining a lower end of the vessel wall, the lower opening (7) being smaller than the upper opening (5), the two openings (5, 7) being eccentric,
an upwardly tapered base (20) for removably closing the lower circular opening (7), the upwardly tapered base (20) extending through the lower circular opening (7) to a height adjacent the junction (14) between the cylindrical upper wall section (2) and the frustoconical lower wall section (3),
a securing ring (30) threadably engageable with a threaded lip (31) formed at the lower circular opening (7) for securing the upwardly tapered base (20) within the opening (7),
a vertical rotational spindle located through the centre of the base, and
a blade assembly located on the spindle (24), the blade assembly comprising a pair of upwardly extending blade arms (27), a pair of radially extending blade arms (26) and a pair of downwardly extending blade arms (25), and wherein the spindle and blade assembly are rotational about a rotational axis that is off-set from the longitudinal axis (10),
wherein the frustoconical lower section (3) comprises a plurality of contiguous cambered protuberances (12) forming a hypocycloidal inner surface within the frustoconical lower section (3).

2. The vessel of any preceding claim, wherein the pair of downwardly extending blade arms (25) are parallel with surfaces of the upwardly tapered base (20).

3. The vessel according to any preceding claim, wherein the upper cylindrical section (2) further comprises a plurality of inwardly extending circumferentially spaced elongate ribs (13).

4. The vessel of any preceding claim, wherein the spindle (24) and blade assembly are rotational about a rotational axis that is inclined at an angle relative to the longitudinal axis (10).

5. The vessel of any preceding claim, wherein the blade assembly comprises a single sheet of metal having a central hub (28) for engagement with the spindle (24) and wherein the pairs of blade arms (27, 26, 25) are circumferentially spaced about the hub (28).

6. The vessel of any preceding claim, wherein the upwardly tapered base (20) comprises a lower frustoconical portion (22) and an upper cylindrical portion (23), and wherein the downwardly extending blade arms (25) are bent at an intermediary location (25') to be parallel with surfaces of the frustoconical (22) and cylindrical (23) portions of the upwardly tapered base (20).

7. The vessel of any preceding claim, wherein the pair of upwardly extending blade arms (27) extend within the cylindrical upper section (2) of the vessel.

## Patentansprüche

1. Mischgefäß zur Verwendung mit einer motorisierten Küchenmaschine, wobei das Gefäß umfasst:
eine Gefäßwand, welche eine zylindrische obere Sektion (2), eine kegelstumpfförmige untere Sektion (3) und ein Verbindungsteil (14) zwischen der zylindrischen oberen Sektion (2) und der kegelstumpfförmigen unteren Sektion (3) umfasst, wobei die zylindrische obere Sektion eine Längsachse (10) aufweist, welche im Wesentlichen innerhalb der zylindrischen oberen Sektion (2) zentriert ist, und eine obere Öffnung (5), welche ein oberes Ende der Gefäßwand definiert, wobei die kegelstumpfförmige untere Sektion (3) vom Verbindungsteil (14) zu einer unteren kreisförmigen Öffnung (7) verjüngt ist, welche ein unteres Ende der Gefäßwand definiert, wobei die untere Öffnung (7) kleiner als die obere Öffnung (5) ist, wobei die zwei Öffnungen (5, 7) exzentrisch sind,
eine nach oben verjüngte Basis (20), zum lösbaren Schließen der unteren kreisförmigen Öffnung (7), wobei die nach oben verjüngte Basis (20) sich durch die untere kreisförmige Öffnung (7) zu einer Höhe an dem Verbindungsteil (14) zwischen der zylindrischen oberen Sektion (2) und der kegelstumpfförmigen unteren Sektion (3) hin erstreckt,
ein Befestigungsring (30), welcher mit einer Gewindelippe (31) in Gewindeeingriff bringbar ist, welche an der unteren kreisförmigen Öffnung (7) gebildet ist, zum Befestigen der nach oben verjüngten Basis (20) innerhalb der Öffnung (7),
eine senkrechte drehbare Spindel, welche durch den Mittelpunkt der Basis angeordnet ist, und
eine Klingenanordnung, welche auf der Spindel (24) angeordnet ist, wobei die Klingenanordnung ein Paar von sich nach oben erstreckenden Klingenarmen (24), ein Paar von sich radial erstreckenden Klingenarmen (26) und ein Paar von sich nach unten erstreckenden Klingenarmen (25) umfasst, und wobei die Spindel und die Klingenanordnung um eine Drehachse drehbar sind, welche von der Längsachse (10) versetzt ist,
wobei die kegelstumpfförmige untere Sektion (3) eine Mehrzahl von angrenzenden gewölbten Vorsprüngen (12) umfasst, welche eine hypozykloidale innere Oberfläche innerhalb der kegelstumpfförmigen unteren Sektion (3) bilden.

2. Gefäß nach einem der vorhergehenden Ansprüche, wobei das Paar von sich nach unten erstreckenden Klingenarmen (25) zu Oberflächen der nach oben verjüngten Basis (20) parallel ist.

3. Gefäß nach einem der vorhergehenden Ansprüche, wobei die obere zylindrische Sektion (2) ferner eine Mehrzahl von sich nach innen erstreckenden umfangsseitig voneinander beabstandeten längliche Rippen (13) umfasst.

4. Gefäß nach einem der vorhergehenden Ansprüche, wobei die Spindel (24) und die Klingenanordnung um eine Drehachse drehbar sind, welche in einem Winkel relativ zur Längsachse (10) geneigt ist.

5. Gefäß nach einem der vorhergehenden Ansprüche, wobei die Klingenanordnung eine einzelne Metallfolie umfasst, welche eine zentrale Nabe (28) zum Eingriff mit der Spindel (24) aufweist, und wobei die Paare von Klingenarmen (27, 26, 25) um die Nabe (28) umfangsseitig voneinander beabstandet sind.

6. Gefäß nach einem der vorhergehenden Ansprüche, wobei die nach oben verjüngte Basis (20) einen unteren kegelstumpfförmigen Abschnitt (22) und einen oberen zylindrischen Abschnitt (23) umfasst, und wobei die sich nach unten erstreckenden Klingenarme (25) an einer Zwischenposition (25') gebogen sind,
damit sie zu Oberflächen des kegelstumpfförmigen (22) und zylindrischen (23) Abschnitts der nach oben verjüngten Basis (20) parallel sind.

7. Gefäß nach einem der vorhergehenden Ansprüche, wobei das Paar von sich nach oben erstreckenden Klingenarmen (27) sich innerhalb der zylindrischen oberen Sektion (2) des Gefäßes erstrecken.

## Revendications

1. Cuve de mélange destinée à être utilisée avec un robot culinaire motorisé, comprenant :
une paroi de cuve incluant une section supérieure cylindrique (2), une section inférieure en tronc de cône (3) et une jonction (14) entre la section supérieure cylindrique (2) et la section inférieure en tronc de cône (3), la section supérieure cylindrique comportant un axe longitudinal (10) centré en général dans la section supérieure cylindrique (2), et une ouverture supérieure (5) définissant une extrémité supérieure de la paroi de la cuve, la section inférieure en tronc de cône (3) étant effilée de la jonction (14) vers une ouverture circulaire inférieure (7) définissant une extrémité inférieure de la paroi de la cuve, l'ouverture inférieure (7) étant plus petite que l'ouverture supérieure (5), les deux ouvertures (5, 7) étant excentriques ;
une base effilée vers le haut (20) pour fermer de manière amovible l'ouverture circulaire inférieure (7), la base effilée vers le haut (20) s'étendant à travers l'ouverture circulaire inférieure (7) jusqu'à une hauteur adjacente à la jonction (14) entre la section de paroi supérieure cylindrique (2) et la section de paroi inférieure en tronc de cône (3) ;
une bague de fixation (30) pouvant s'engager par filetage dans une lèvre filetée (31) formée au niveau de l'ouverture circulaire inférieure (7) pour fixer la base effilée vers le haut (20) dans l'ouverture (7) ;
une broche verticale rotative agencée à travers le centre de la base ; et
un ensemble de lames agencé sur la broche (24), l'ensemble de lames comprenant une paire de bras de lame s'étendant vers le haut (27), une paire de bras de lame à extension radiale (26) et une paire de bras de lame s'étendant vers le bas (25), et dans laquelle la broche et l'ensemble de lames peuvent tourner autour d'un axe de rotation décalé par rapport à l'axe longitudinal (10) ;
dans laquelle la section inférieure en tronc de cône (3) comprend plusieurs protubérances cambrées contigües (12) formant une surface interne hypocycloïdale dans la section inférieure en tronc de cône (3) ;

2. Cuve selon l'une quelque des revendications précédentes, dans laquelle la paire de bras de lame s'étendant vers le bas (25) est parallèle aux surfaces de la base effilée vers le haut (20).

3. Cuve selon l'une quelconque des revendications précédentes, dans laquelle la section cylindrique supérieure (2) comprend en outre plusieurs nervures allongée espacées circonférentiellement et s'étendant vers l'intérieur (13).

4. Cuve selon l'une quelconque des revendications précédentes, dans laquelle la broche (24) et l'ensemble de lames peuvent tourner autour d'un axe de rotation incliné à un angle par rapport à l'axe longitudinal (10).

5. Cuve selon l'une quelconque des revendications précédentes, dans laquelle l'ensemble de lames comprend une seule feuille de métal comportant un moyeu central (28) destiné à s'engager dans la broche (24), et dans laquelle les paires de bras de lame (27, 26, 25) sont espacées circonférentiellement autour du moyeu (28).

6. Cuve selon l'une quelconque des revendiquions précédentes, dans laquelle la base effilée vers le haut (20) comprend une partie inférieure en tronc de cône (22) et une partie supérieure cylindrique (23), et dans laquelle les bras de lame s'étendant vers le bas (25) sont fléchis au niveau d'un emplacement intermédiaire (25'), de sorte à être parallèles aux surfaces des parties en tronc de cône (22) et cylindrique (23) de la base effilée vers le haut (20).

7. Cuve selon l'une quelconque des revendications précédentes, dans laquelle la paire de bras de lame s'étendant vers le haut (27) s'étend dans la section supérieure cylindrique (2) de la cuve.
